# EUROPÄISCHE PATENTSCHRIFT

(11) **EP 1 356 211 B1**
(45) Veröffentlichungstag und Bekanntmachung des Hinweises auf die Patenterteilung: **28.09.2005**
(21) Anmeldenummer: 02710243.3
(22) Anmeldetag: 01.02.2002
(51) Int. Cl.: F16C 37/00, F16C 17/24

(54) **VERFAHREN UND VORRICHTUNG ZUR BETRIEBSÜBERWACHUNG EINES GLEITLAGERS**
METHOD AND DEVICE FOR MONITORING THE OPERATION OF A PLAIN BEARING
PROCEDE ET DISPOSITIF POUR SURVEILLER LE FONCTIONNEMENT D'UN PALIER LISSE

(30) Priorität: 02.02.2001 DE 10104697
(43) Veröffentlichungstag der Anmeldung: 29.10.2003
(73) Patentinhaber: Alstom Technology Ltd, 5400 Baden (CH)
(72) Erfinder: FUERST, Axel, Günter, Albert, CH-5412 Gebenstorf (CH); MATYSCAK, Kamil, 79777 Brenden (DE)
(86) Internationale Anmeldenummer: PCT/IB2002/000385
(87) Internationale Veröffentlichungsnummer: WO 2002/061297

(56) Entgegenhaltungen:
- DE-C- 883 984
- US-A- 5 145 322
- US-A- 5 894 868
- PATENT ABSTRACTS OF JAPAN vol. 010, no. 349 (M-538), 26. November 1986 (1986-11-26) -& JP 61 149611 A (TOSHIBA CORP), 8. Juli 1986 (1986-07-08)

## Beschreibung

### Technisches Gebiet

Die vorliegende Erfindung betrifft ein Verfahren zur Betriebsüberwachung eines Gleitlagers gemäss dem Oberbegriff des Anspruchs 1. Die Erfindung gibt weiterhin ein Gleitlager an, welches zur Durchführung der Erfindung besonders geeignet ist.

### Stand der Technik

Bei einem hydrostatischen oder hydrodynamischen Gleitlager, bei welchem die eigentliche Lagerung von einem ausgebildeten dünnen Schmierfilm aus einem Fluid (z.B. aus einem Öl) übernommen wird, gibt eine Messung der Temperatur des Schmiermittels im Schmierfilm oder eine Temperaturmessung in den angrenzenden Gleitflächen Auskunft über den Zustand des Lagers, und eignet sich daher besonders gut zur Betriebsüberwachung.

So ist aus EP 0 161 644 bekannt, bei einem Gleitlager zur Früherkennung von Schäden die Temperatur im Bereich der Gleitschicht zu überwachen, um bei einer merklichen Temperaturerhöhung rechtzeitig Gegenmassnahmen ergreifen zu können. Dabei wird allerdings eine Änderung der Schmierstofftemperatur mit erheblicher zeitlicher Verzögerung und nur mittelbar registriert. Selbst wenn der Temperaturaufnehmer direkt an die Oberfläche bzw. Gleitfläche geführt würde, würde bestenfalls die Lagersegmenttemperatur gemessen. Die Schmierstoff-bzw. Fluidtemperatur kann lokal deutlich darüber liegen, da 90-97% der im Fluid erzeugten Wärme durch das Fluid selbst abgeführt werden, also am Temperatursensor vorbei; nur grössenordnungsmässig 5% der Wärme werden durch das Lagersegment geleitet.

Eine direkte Messung der Schmierstofftemperatur im Schmierfilm ist im Stand der Technik nicht bekannt. Das Problem bei der direkten Messung ist, dass der Film z.B. bei Öl als Schmierstoff nur 20- ca. 200 µm dick ist, so, dass sich keine Sonden einbauen lassen. DE -PS 883 984 gibt eine Lagerbauart für Walzwerke an, die zur Kühlung mit einer Überschuss-Schmierstoffmenge vorsorgt wird, welche grösser ist, als die in den Schmierspalten durchzusetzende Schmiermittelmenge. Die Überschussmenge wird durch eine Rücklaufleitung aus Frischölkammern abgeführt. DE-PS 883 984 schlägt vor, in dieser Rücklaufleitung einen Temperatursensor anzuordnen, um die Temperatur der Lagerfläche zu bestimmen. Dabei besteht aber einerseits die Gefahr, dass die Messung durch Zulauf-Schmierstoff verfälscht wird; andererseits kann das vorgeschlagene Messverfahren nur bei speziellen Lagern, die mit Überschussöl betrieben werden, zur Anwendung kommen. Weiterhin sind Rückschlüsse auf die Temperatur im Lagerspalt mit grossen Unsicherheiten behaftet, da das gemessene Medium ja explizit nicht aus dem Lagerspalt stammt.

### Darstellung der Erfindung

Es ist Aufgabe der Erfindung, ein Verfahren zur Temperaturüberwachung in einem mit einem Schmierfilm arbeitenden Gleitlager, insbesondere in einem hydrodynamischen Gleitlager, zu schaffen, welches die Nachteile des Standes der Technik vermeidet und insbesondere eine weitgehend unmittelbare und genaue Überwachung der Schmiermitteltemperatur im Lagerspalt ermöglicht, und welches auch möglichst geringe Modifikationen bestehender Lager erfordert. Weiterhin soll ein Gleitlager angegeben werden, welches mit geringem konstruktivem Aufwand eine möglichst unmittelbare Messung der Schmiermitteltemperatur ermöglicht, und möglicht keine weitgehende Umkonstruktion bestehender Lager oder Lagersegmente erfordert.

Gerade bei grossen Gleitlagern werden diese häufig aus mehreren Lagersegmenten zusammengestellt. Im Rahmen der vorliegenden Erfindung wird der Erfindungsgedanke in keiner Weise davon berührt, ob die Erfindung an einem segmentierten oder einem nichtsegmentierten Gleitlager implementiert wird. Daher umfasst der Bezug auf einen der Begriffe im folgenden auch den anderen, was sich dem Fachmann ohne Weiteres erschliesst.

Die Aufgabe wird durch die Gesamtheit der Merkmale der unabhängigen Ansprüche gelöst. Der Kern der Erfindung besteht darin, den Temperaturaufnehmer zur Messung direkt mit Schmierstoff aus dem Schmierfilm dadurch in Kontakt zu bringen, dass Schmierstoff aus dem Schmierfilm entnommen und die Temperatur des entnommenen Schmierstoffs unmittelbar nach der Entnahme mit dem Temperaturaufnehmer gemessen wird. Dies wird erreicht, indem ein Schmierstoffkanal, wie ein Schmierstoffkanal einer Hebeölvorrichtung, welcher im hydrodynamischen Betrieb des Lagers nicht oder nicht permanent zur Schmierstoffzufuhr benötigt wird, durch geeignete Umschaltmittel temporär oder permanent als Abströmkanal für einen Teilsstrom des Schmierstoff aus dem Schmierfilm betrieben wird. Dabei ist der Entnahmestrom einerseits so klein zu halten, dass der Druckaufbau im Schmierfilm nicht gestört wird; andererseits muss der Entnahmestrom gross genug sein, um eine Temperaturänderung durch Wärmeverluste an das Lagersegment klein zu halten, damit die Temperatur aus dem Schmierfilm möglichst unverfälscht zum Temperaturaufnehmer "gebracht" werden kann. Bevorzugt wird der Entnahmestrom durch eine entsprechend angeordnete, bevorzugt einstellbare, Drosselstelle eingestellt. Für eine ungestörte Funktion des Gleitlagers ist es dabei von Vorteil, wenn die aus dem Schmierfilm entnommene Menge an Schmierstoff so klein gehalten wird, dass sich der Schmierfilm nicht wesentlich ändert; die Entnahmemenge beträgt daher bevorzugt weniger als 5%, insbesondere weniger als 2 oder gar deutlich weniger als 1 % der gesamten dem Lager für den hydrodynamischen Betrieb zugeführten Schmierstoffmenge; gleichwohl: je weniger entnommen wird, desto träger reagiert die Messung.

Eine weitere bevorzugte Ausgestaltung des Verfahrens nach der Erfindung ist dadurch ausgezeichnet, dass während der Durchführung des Verfahrens der Druck im Schmierstoffkanal gemessen wird. In Abhängigkeit von dem gemessenen Druck wird dann der Durchfluss durch eine variable Drosselstelle variiert. Alternativ oder ergänzend kann in Abhängigkeit vom gemessenen Druck das Umschaltmittel angesteuert werden, so, dass je nach gemessenem Schmierstoffdruck die Zuführung des Schmierstoffs zum Schmierfilm oder die Entnahme des Schmierstoffs aus dem Schmierfilm freigegeben wird.

Ein erfindungsgemässes Gleitlager oder ein Gleitlagersegment zeichnet sich dadurch aus, dass ein Schmierstoffkanal auf einer Gleitfläche des Gleitlagers mündet, wobei der Schmierstoffkanal an einem dieser Mündung gegenüberliegenden Ende mit einem geeigneten Umschaltmittel verbunden ist, über welches der Schmierstoffkanal wahlweise auf eine Zuleitung für Schmierstoff, beispielsweise aus einem Hochdruckschmiersystem, insbesondere einer Hebeölvorrichtung, und eine Abströmleitung für Schmierstoff aufschaltbar ist. Im Übrigen bezieht sich wie oben beschrieben der Terminus "Gleitlager" auch auf einzelne Gleitlagersegmente. Insbesondere vorteilhaft ist es, wenn ein Temperaturaufnehmer zur Bestimmung der Schmierstofftemperatur, insbesondere ein Thermoelement oder ein PT 100 Thermofühler, in den Schmierstoffkanal hineinreicht. Für eine möglichst präzise und schnelle Messung ist der Temperaturaufnehmer so nahe wie konstruktiv eben möglich an der Mündung des Schmierstoffkanals angeordnet. Zur Begrenzung und/oder Einstellung des Entnahmestroms ist in der Abströmleitung für den Schmierstoff eine bevorzugt einstellbare Drosselvorrichtung angeordnet.

In einer weiteren Ausführungsform des Gleitlagers ist in dem Schmierstoffkanal eine Druckmessstelle angeordnet, deren Signal bevorzugt über wenigstens einen Regler auf die Umschaltmittel und/oder eine in der Abströmleitung für Schmierstoff angeordnete verstellbare Drosselvorrichtung und/oder ein Schmierstoff- oder Druckölsystem geführt ist.

Das erfindungsgemässe Lager zeichnet sich durch seine Einfachheit aus, da intern ohnehin vorhandene Leitungen, die nicht in allen Betriebszuständen für ihre eigentliche Verwendung benötigt werden, zur Entnahme eines Messfluides aus dem Lager entnommen werden, wobei der Temperaturfühler geschützt im Inneren des Lagers oder des Lagersegmentes angeordnet ist. Konstruktive Änderungen bestehender Lager oder Lagersegmente beschränken sich auf ein Minimum, und greifen nicht in die Funktionsweise ein. Insofern können auch bestehende Konstruktionen ohne übertriebenen Aufwand gemäss der Erfindung umgerüstet werden.

### Kurze Beschreibung der Figuren

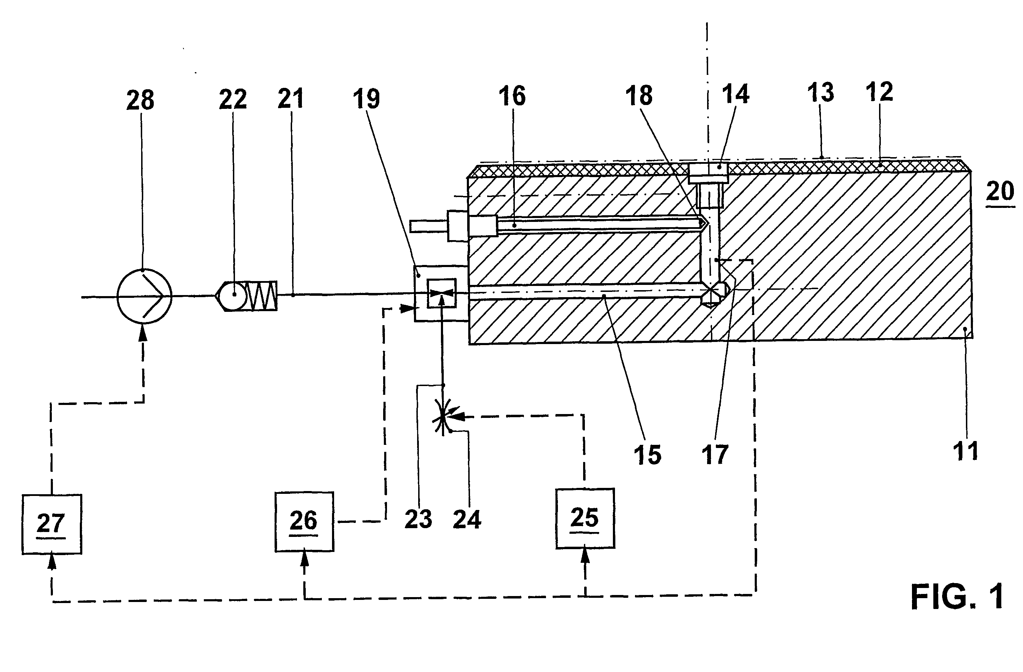

Die Erfindung soll nachfolgend anhand der Zeichnung näher erläutert werden. Die einzige Figur zeigt ein erfindungsgemässes Lagersegment in einer schematisierten Schnittdarstellung; die nachfolgenden Ausführungen und die Zeichnung dienen nur dem besseren Verständnis der Erfindung, und sollen nur instruktiv und nicht einschränkend verstanden werden.

### Wege zur Ausführung der Erfindung

In der Figur ist ein Lagersegment eines hydrodynamischen Gleitlagers mit einer Temperaturüberwachung des Schmierfilms gemäss einer bevorzugten Ausführungsform der Erfindung wiedergegeben. Ein hydrodynamisches Gleitlager 20 der Figur besteht aus mehreren Lagersegmenten, von denen nur das Lagersegment 11 dargestellt, welches mit einem Hochdruckschmiersystem, beispielsweise einer Hebeölvorrichtung, welche durch die Pumpe 28 unvollständig angedeutet ist, versehen ist. Derartige Lagersegmente sind insbesondere in einem unteren Bereich eines Lagers angeordnet. Bei niedrigen Drehzahlen einer im Lager gelagerten Welle kann noch kein ausreichender hydrodynamischer Schmierfilm aufgebaut werden. Gerade bei stark gewichtsbelasteten Lagern wird daher eine solche Hebeölvorrichtung eingesetzt. Vor dem Anfahren der Welle wird im Stillstand durch die Hochdruckpumpe 28 Schmiermittel durch den Schmierstoffkanal 15 Schmierstoff in den nicht dargestellten Lagerspalt gepresst, und hebt im Idealfall die zu tragende Last vollständig von der Gleitfläche 12 ab. Die Welle wird daraufhin sukzessive in Bewegung versetzt. Dabei ist die Mündung 14 des Schmierstoffkanals so ausgebildet, dass ein die Lagerfläche möglicht vollständig benetzender Schmierfilm 13 aufgebaut wird, dergestalt, dass die Notlaufeigenschaften einer Gleitschicht 12 nicht beansprucht werden. Mit steigender Drehzahl einer in einem hydrodynamischen Gleitlager gelagerten Welle baut sich im Schmierspalt ein ausreichend hoher Druck auf, damit die Lagerlast alleine durch den ausgebildeten hydrodynamischen Schmierfilm getragen werden kann. Dieser Druck übersteigt häufig den, der durch eine Pumpe vernünftig aufgebracht werden kann; daher ist in der Zuführleitung 21 für den Schmierstoff ein Rückschlagventil 22 angeordnet; Weiterhin könnte zwischen dem Rückschlagventil 22 und der Pumpe 28 beispielsweise eine an sich bekannte Druckentlastungsvorrichtung angeordnet sein, um die Pumpe vor Überlast zu schützen. Im hydrodynamischen Betrieb des Lagers wird der Schmierstoffkanal 15 also nicht mehr für seine eigentliche Aufgabe benötigt. Erfindungsgemäss wird der Schmierstoffkanal daher mit einer Probenströmung aus dem Lagerspalt heraus beaufschlagt. Hierzu ist an dem Schmierstoffkanal 15 ein Umschaltventil 19 angeordnet, mittels dem der Schmierstoffkanal wahlweise auf die Schmierstoff-Zuleitung 21 und eine Abströmleitung 23 aufschaltbar ist. Wenn also ein hydrodynamischer Betrieb gewährleistet ist, wird das Umschaltventil 19 so geschaltet, dass Schmierstoff aus dem Schmierfilm 13 in die Abströmleitung 23 abströmt. Ein Temperaturaufnehmer 16 ist so angeordnet, dass er mit seiner eigentlichen Messstelle 18 in den Schmierstoffkanal hineinreicht; dabei ist diese Messstelle bevorzugt so nahe als konstruktiv irgend möglich an der Mündung 14 des Schmierstoffkanals 15 angeordnet. Derart bestimmt der Temperaturaufnehmer 16 die Temperatur des vom Schmierfilm 13 kommenden Schmierstoffes, welche bei der gewählten konstruktiven Auslegung sehr genau der Temperatur des Schmierfilms 13 entspricht. Die Entnahmemenge muss dabei klein genug sein, um den Schmierfilm nicht wirksam zu stören; andererseits sollte sie gross genug sein, damit die Messung zeitnah und exakt erfolgt. Die Entnahmemenge wird über eine in der Abströmleitung 23 angeordnete, vorzugsweise variable, Drosselvorrichtung 24 eingestellt. Die Stellung des Umschaltventils 19 wird in einem einfachen Fall beispielsweise über die Wellendrehzahl gesteuert werden, dergestalt, dass bis zu einer ersten Drehzahl Schmierstoff aus der Zuleitung 21 in den Schmierstoffkanal 15 einströmt und oberhalb dieser Drehzahl der Strömungsweg vom Schmierstoffkanal zur Abströmleitung 23 freigegeben wird. Im dargestellten Beispiel wurde eine andere Steuerung gewählt. Im Schmierstoffkanal 15 ist eine Druckmessstelle 17 angeordnet. Ein dort gemessener Druck wird als Führungsgrösse für eine Anzahl von Regeleingriffen herangezogen. Dabei wird der Druck im Schmierstoffkanal bei der dargestellten Ausführungsform in drei Regeldomänen geregelt. In einer ersten Regeldomäne, welche in einem niedrigsten Druckbereich angesetzt ist, greift ein Drucksignal von der Messstelle 17 über den Regler 27 auf das Hockdruck-Schmiersystem respektive die Pumpe 28 ein. Dabei ist in Umschaltventil der Strömungsweg von der Zuleitung 21 zum Schmierstoffkanal 15 freigeschaltet. In einer zweiten Regeldomäne wird abhängig vom gemessenen Druck über den Regler 26 das Umschaltventil 1.9 betätigt, wobei der Regler 26 bevorzugt ein Zweipunktregler ist: Oberhalb eines ersten Druckgrenzwertes wird der Strömungsweg vom Schmierstoffkanal 15 zur Abströmleitung 23 freigeschaltet, die Schmierstoffführung wird also auf dem Messbetrieb umgeschaltet. Ein umgekehrter Schaltvorgang erfolgt bei einem zweiten Druckgrenzwert, der kleiner ist, als der erste Druckgrenzwert. Durch die so implementierte Hysterese der Schaltpunkte wird ein unkontrollierbares Hin- und Herschalten vermieden. Im Messbetrieb ist die Drosselvorrichtung 24 in einem untersten Druckbereich auf einen vorgegebenen Minimaldurchfluss eingestellt. Bei höherem Druck kommt die dritte Regeldomäne zum tragen, und über den Regler 25 wird über den Durchfluss der Drosselstelle 24 der Druck im Schmierstoffkanal 15 eingestellt.

Durch die erfindungsgemässe Konfiguration und das erfindungsgemässe Verfahren ergibt sich eine sensible und exakte Betriebsüberwachung des Gleitlagers. Ein beginnender Lagerschaden, der sich durch einen Anstieg der Schmierstofftemperatur im Schmierfilm 13 ankündigt, wird sofort registriert.

### Bezugszeichenliste

- 11: Lagersegment
- 12: Gleitschicht
- 13: Schmierfilm
- 14: Mündung, Schmierstoffaustritt
- 15: Schmierstoffkanal
- 16: Temperaturaufnehmer
- 17: Druckmessstelle, Druckaufnehmer
- 18: Messstelle des Temperaturaufnehmers
- 19: Umschaltmittel, Umschaltventil
- 20: Gleitlager
- 21: Zuleitung
- 22: Rückschlagventil
- 23: Abströmleitung
- 24: Drosselvorrichtung
- 25: Regler
- 26: Regler
- 27: Regler
- 28: Schmiersystem, Hochdruckschmiersystem, Hebeölvorrichtung, Pumpe

## Patentansprüche

1. Verfahren zur Betriebsüberwachung eines Gleitlagers (20), in welchem Gleitlager in einem ersten Betriebszustand eine erste Schmierstoffmenge aus einem Schmierstoffkanal (15) zu einem Schmierfilm (13) zugeführt wird, **dadurch gekennzeichnet, dass** in einem zweiten Betriebszustand eine zweite Schmierstoffmenge von dem Schmierfilm (13) durch den Schmierstoffkanal (15) abströmt, und die Temperatur der zweiten Schmierstoffmenge gemessen wird.

2. Verfahren nach Anspruch 1, **dadurch gekennzeichnet, dass** der Schmierstoffkanal (15) über ein Umschaltmittel (19) mit einer Zuleitung (21) für die erste Schmierstoffmenge und einer Abströmleitung (23) für die zweite Schmierstoffmenge verbunden ist, und dass zur Messung der Schmierstofftemperatur das Umschaltventil (19) so umgeschaltet wird, dass die zweite Schmierstoffmenge in die Abströmleitung (23) abströmt.

3. Verfahren nach einem der vorstehenden Ansprüche, **dadurch gekennzeichnet, dass** die zweite Schmierstoffmenge durch eine Drosselvorrichtung (24) eingestellt wird.

4. Verfahren nach Anspruch 3, **dadurch gekennzeichnet, dass** der Durchfluss durch die Drosselvorrichtung (24) in Abhängigkeit von einem gemessenen Druck im Schmierstoffkanal (15) eingestellt wird.

5. Verfahren nach Anspruch 2, **dadurch gekennzeichnet, dass** in Abhängigkeit von einem gemessenen Druck im Zuführkanal (15) das Umschaltmittel (19) angesteuert wird, dergestalt, dass unterhalb eines ersten Grenzwertes die Zuleitung (21) für die erste Schmierstoffmenge freigegeben wird, und oberhalb eines zweiten Grenzwertes die Abströmleitung (23) für die zweite Schmierstoffmenge freigegeben wird.

6. Gleitlager oder Gleitlagersegment, mit einer Gleitfläche (12) und einem in der Gleitfläche mündenden Schmierstoffkanal (15), **dadurch gekennzeichnet, dass** der Schmierstoffkanal (15) über ein Umschaltmittel (19) wahlweise mit einer Zuleitung (21) für Schmierstoff und einer Abströmleitung (23) für Schmierstoff in Verbindung steht.

7. Gleitlager oder Gleitlagersegment nach Anspruch 6, **dadurch gekennzeichnet, dass** ein Temperaturaufnehmer (16, 18) in den Schmierstoffkanal (15) hineinreicht.

8. Gleitlager oder Gleitlagersegment nach einem der Ansprüche 6 oder 7, **dadurch gekennzeichnet, dass** in der Abströmleitung (23) für Schmierstoff eine insbesondere verstellbare Drosselvorrichtung (24) angeordnet ist

9. Gleitlager oder Gleitlagersegment nach einem der Ansprüche 6 bis 8, **dadurch gekennzeichnet, dass** in dem Schmierstoffkanal (15) eine Druckmessstelle (17) angeordnet ist.

10. Gleitlager oder Gleitlagersegment nach Anspruch 9, **dadurch gekennzeichnet, dass** ein Signal von der Druckmessstelle (17) über wenigstens einen Regler (25, 26, 27) auf das Umschaltmittel (19) und/oder eine in der Abströmleitung (23) für Schmierstoff angeordnete verstellbare Drosselvorrichtung (24) und/oder ein Schmiersystem (28) geführt ist.

## Claims

1. Method of monitoring the operation of a plain bearing (20), in which plain bearing, in a first operating state, a first lubricant quantity is fed from a lubricant passage (15) to a lubricating film (13), **characterized in that**, in a second operating state, a second lubricant quantity flows off from the lubricating film (13) through the lubricant passage (15), and the temperature of the second lubricant quantity is measured.

2. Method according to Claim 1, **characterized in that** the lubricant passage (15) is connected via a switch-over means (19) to a feed line (21) for the first lubricant quantity and to an outflow line (23) for the second lubricant quantity, and **in that**, to measure the lubricant temperature, the switch-over value (19) is switched over in such a way that the second lubricant quantity flows off into the outflow line (23).

3. Method according to either of the preceding claims, **characterized in that** the second lubricant quantity is set by a choke device (24).

4. Method according to Claim 3, **characterized in that** the rate of flow through the choke device (24) is set as a function of a measured pressure in the lubricant passage (15).

5. Method according to Claim 2, **characterized in that** the switch-over means (19) is activated as a function of a measured pressure in the feed passage (15) in such a way that the feed line (21) for the first lubricant quantity is cleared below a first limit value and the outflow line (23) for the second lubricant quantity is cleared above a second limit value.

6. Plain bearing or plain bearing segment, having a sliding surface (12) and a lubricant passage (15) opening out in the sliding surface, **characterized in that** the lubricant passage (15) is optionally connected via a switch-over means (19) to a feed line (21) for lubricant and to an outflow line (23) for lubricant.

7. Plain bearing or plain bearing segment according to Claim 6, **characterized in that** a temperature sensor (16, 18) extends into the lubricant passage (15).

8. Plain bearing or plain bearing segment according to either of Claims 6 and 7, **characterized in that** an in particular adjustable choke device (24) is arranged in the outflow line (23) for lubricant.

9. Plain bearing or plain bearing segment according to one of Claims 6 to 8, **characterized in that** a pressure-measuring point (17) is arranged in the lubricant passage (15).

10. Plain bearing or plain bearing segment according to Claim 9, **characterized in that** a signal is directed from the pressure-measuring point (17) via at least one controller (25, 26, 27) to the switch-over means (19) and/or to an adjustable choke device (24) arranged in the outflow line (23) for lubricant and/or to a lubricating system (28).

## Revendications

1. Procédé pour surveiller le fonctionnement d'un palier lisse (20) dans lequel, dans un premier état de fonctionnement, une première quantité de lubrifiant est conduite d'un conduit de lubrifiant (15) à un film lubrifiant (13), **caractérisé en ce que**, dans un deuxième état de fonctionnement, une deuxième quantité de lubrifiant s'écoule du film de lubrifiant (13) à travers le conduit de lubrifiant (15), et la température de la deuxième quantité de lubrifiant est mesurée.

2. Procédé selon la revendication 1, **caractérisé en ce que** le conduit de lubrifiant (15) est relié par un moyen de commutation (19) avec une conduite d'alimentation (21) pour la première quantité de lubrifiant et une conduite d'évacuation (23) pour la deuxième quantité de lubrifiant, et **en ce que**, pour la mesure de la température du lubrifiant, la soupape de commutation (19) est commutée de telle sorte que la deuxième quantité de lubrifiant s'écoule dans la conduite d'évacuation (23).

3. Procédé selon l'une quelconque des revendications précédentes, **caractérisé en ce que** la deuxième quantité de lubrifiant est ajustée par un dispositif d'étranglement (24).

4. Procédé selon la revendication 3, **caractérisé en ce que** le débit est ajusté par le dispositif d'étranglement (24) en fonction d'une pression mesurée dans le conduit de lubrifiant (15).

5. Procédé selon la revendication 2, **caractérisé en ce que** le moyen de commutation (19) est commandé en fonction d'une pression mesurée dans le conduit d'alimentation (15) de telle sorte qu'au-dessous d'une première valeur limite, la conduite d'alimentation (21) est libérée pour la première quantité de lubrifiant et qu'au-dessus d'une deuxième valeur limite, la conduite d'évacuation (23) est libérée pour la deuxième quantité de lubrifiant.

6. Palier lisse ou patin de palier lisse doté d'une surface de glissement (12) et d'un conduit de lubrifiant (15) débouchant dans la surface de glissement, **caractérisé en ce que** le conduit de lubrifiant (15) est relié par un moyen de commutation (19) au choix avec une conduite d'alimentation (21) de lubrifiant ou une conduite d'évacuation (23) de lubrifiant.

7. Palier lisse ou patin de palier lisse selon la revendication 6, **caractérisé en ce qu'**un enregistreur de température (16, 18) pénètre dans le conduit de lubrifiant (15).

8. Palier lisse ou patin de palier lisse selon l'une quelconque des revendications 6 et 7, **caractérisé en ce qu'**un dispositif d'étranglement (24) en particulier réglable est agencé dans la conduite d'évacuation (23) de lubrifiant.

9. Palier lisse ou patin de palier lisse selon l'une quelconque des revendications 6 à 8, **caractérisé en ce qu'**un point de mesure de pression (17) est agencé dans le conduit de lubrifiant (15).

10. Palier lisse ou patin de palier lisse selon la revendication 9, **caractérisé en ce qu'**un signal du point de mesure de pression (17) est transmis par au moins un régulateur (25, 26, 27) au moyen de commutation (19) et/ou à un dispositif d'étranglement (24) réglable agencé dans la conduite d'évacuation (23) de lubrifiant et/ou à un système de lubrification (28).
